# EUROPEAN PATENT SPECIFICATION

(11) **EP 1 688 296 B1**
(45) Date of publication and mention of the grant of the patent: **09.04.2008**
(21) Application number: 05100740.9
(22) Date of filing: 03.02.2005
(51) Int. Cl.: B60K 31/04

(54) **Motor vehicle acceleration limiter**
Fahrzeugbeschleunigungsbegrenzer
Limiteur d'accélération pour véhicule

(43) Date of publication of application: 09.08.2006
(73) Proprietor: Iveco France S.A., 69200 Vénissieux (FR)
(72) Inventor: Desneux, Alexandre, 38460 Chamagnieu (FR)
(74) Representative: Appoloni, Romano

(56) References cited:
- EP-A- 1 445 460
- DE-A1- 3 930 911
- DE-A1- 10 138 620
- DE-A1- 10 225 891
- US-A- 5 646 850
- US-A1- 2003 105 573
- US-A1- 2004 140 143

## Description

The present invention relates to a motor vehicle acceleration limiter, and to a calculator and a process suitable for said limiter.

Such a vehicle acceleration limiter, according to the preamble of claim 1, can be found in US 5646850.

The mobility of certain motor vehicles must be controlled, and often reduced. The term "vehicle mobility" means the ability of a motor vehicle to accelerate more or less abruptly.

For example, maximum mobility at full load is required for public transport vehicles. The term "full load" means herein the situation wherein the weight of the load carried by the vehicle is equal to the gross vehicle weight rating.

Typically, the mobility of a public transport vehicle is therefore defined as the minimum time taken to cover a given distance with a full load from a standing start. For example, the mobility of a bus can be defined as a minimum time of 24 seconds to cover 200 m with a full load.

It is the main object of the present invention to provide an acceleration limiter designed to meet the constraints imposed on the mobility of motor vehicles.

It relates to a motor vehicle acceleration limiter comprising:
- a motor vehicle engine torque control unit, designed to reduce the engine torque on the basis of the value of an engine torque reduction coefficient, and
- a calculator which calculates the value of said coefficient on the basis of the difference between the acceleration detected for the vehicle and an acceleration threshold, the value of the acceleration threshold depending on the detected speed of the motor vehicle.

Such an acceleration limiter offers a number of advantages. In particular, limited acceleration reduces the fuel consumption of the motor vehicle. Moreover, the fact that the acceleration of the vehicle is limited in relation to an acceleration threshold whose value varies according to speed allows the mobility of the motor vehicle to be adapted on the basis of its speed.

The embodiments of said acceleration limiter may involve one or more of the following characteristics:
- a predefined acceleration curve representing the value of the acceleration threshold according to the speeds detected for the motor vehicle, said curve presenting an ascending slope followed by a descending slope, according to the increasing speed values detected,
- in view of the increasing speed values detected, the descending slope continues until an acceleration threshold value of 0 is reached,
- the acceleration curve is independent of the weight of the load carried by the motor vehicle,
- a calculator module designed to calculate a reduction coefficient suitable to limit the variations in the value of said coefficient,
- the acceleration threshold value varies solely on the basis of the detected speed of the motor vehicle.

The invention also relates to a calculator designed for use in the acceleration limiter described above.

The invention also relates to a process of limitation of the acceleration of a motor vehicle, comprising:
- a step of vehicle engine torque reduction based on the value of a torque reduction coefficient,
- a step at which the value of the coefficient of reduction is established on the basis of the difference between the detected acceleration of a motor vehicle and a threshold acceleration, and
- a step at which the value of the acceleration threshold is determined on the basis of the detected speed of the motor vehicle.

The invention will be more apparent by the following description, given by way of example but not of limitation, by reference to the drawings, wherein:
- figure 1 is a schematic illustration of the architecture of a bus acceleration limiter,
- figure 2 is a graph representing an acceleration curve used in the limiter shown in figure 1, and
- figure 3 is a flow chart showing the acceleration-limiting process used in the limiter illustrated in figure 1.

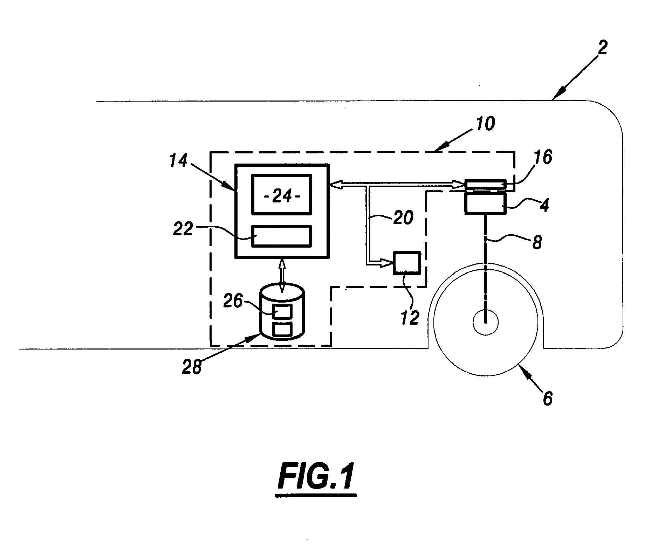

Figure 1 shows a bus 2 equipped with an internal combustion engine 4 designed to cause the rotation of drive wheels 6 of bus 2 via rotating shaft 8.

The torque of engine 4 transmitted to shaft 8 is adjustable.

Bus 2 is equipped with an acceleration limiter 10 so as to limit the mobility of bus 2 on the basis of its travelling speed.

For this purpose, limiter 10 comprises:
- a speed sensor 12 designed to measure the speed Vᵣ of travel of bus 2,
- a calculator 14 designed to calculate an engine torque reduction coefficient K, and
- a control unit 16 designed to control the torque of engine 4 on the basis of the value of coefficient K.

Sensor 12 and control unit 16 are connected to calculator 14 via a data transfer bus 20. Said bus 20 may, for example, be a CAN (Controller Area Network) network.

Sensor 12 is designed to measure the speed and transmit the measured speed thus detected to calculator 14.

Calculator 14 includes a calculator module 22 designed to calculate the detected acceleration aᵣ of bus 2 starting from speed Vᵣ detected by sensor 12.

Calculator 14 also includes a module 24 designed to establish a coefficient K starting from acceleration aᵣ and a predefined acceleration curve 26 recorded in a memory 28 associated with the calculator 14. Memory 28 also includes the prerecorded parameters used by module 24 to calculate coefficient K.

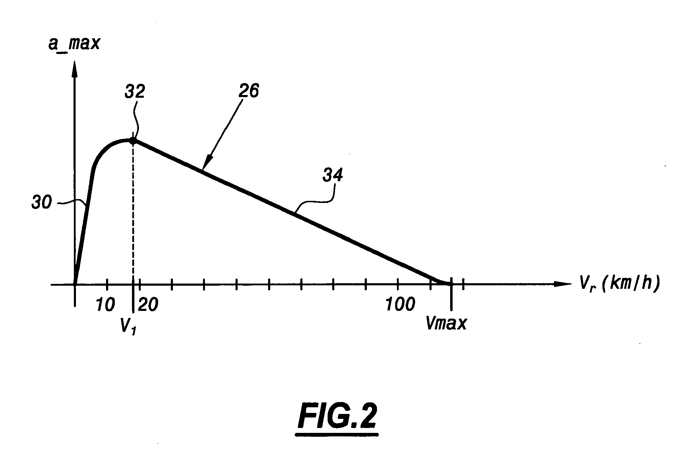

Figure 2 shows an example of curve 26. The x-axis represents the speed Vᵣ in Km/h, and the y-axis represents the value of an acceleration threshold a_max.

Curve 26 presents an ascending slope 30 up to a maximum 32 corresponding to a detected speed value of V₁. For example, value V₁ is equal to 18 Km/h.

Slope 30 increases from a threshold acceleration value close to 0 to a maximum of 32. This ensures that bus 2 starts gently, so that passengers are not jolted when it sets off.

Next, curve 26 presents a descending slope 34 between value V₁ and a maximum value Vₘₐₓ. At value Vₘₐₓ, the value of the acceleration threshold is nil.

Slope 34 is a straight line, so that the driver of bus 2 is not affected by abrupt changes in the mobility of the vehicle.

Said curve 26 has been constructed here in order to ensure the mobility of vehicles designed to be driven in city traffic.

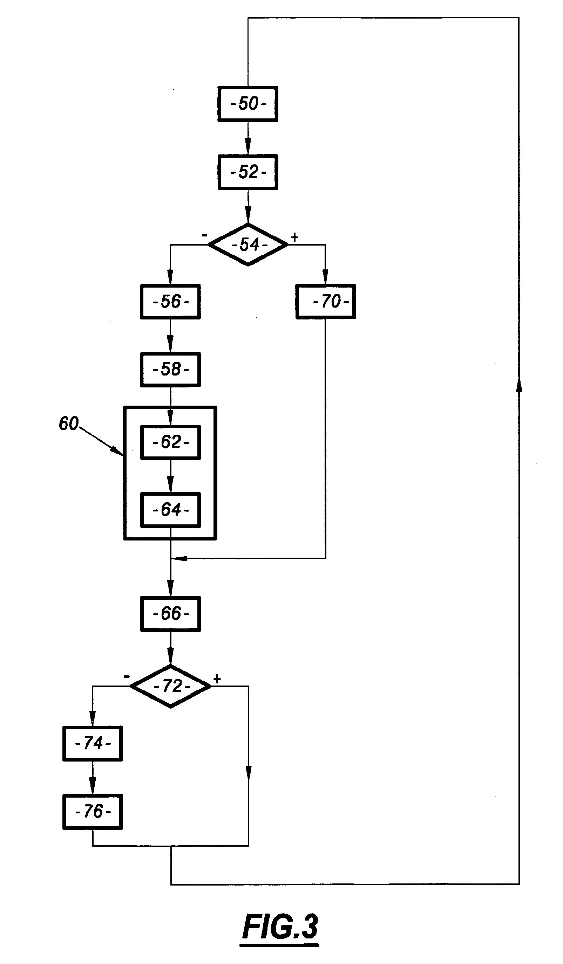

The operation of limiter 10 will now be described in relation to the process shown in figure 3.

During a step 50, sensor 12 measures the speed of bus 2 and transmits said speed to calculator 14.

During a step 52, calculator 14 detects the measured speed, which will then be deemed to be speed Vᵣ of vehicle 2.

Next, during a step 54, calculator 14 checks whether an abnormal or unusual situation is present. For example, during step 54, the calculator checks that no malfunction of the engine or gearbox is signalled, that bus 20 is operating correctly, and that a catalytic converter regeneration step has not been triggered.

If no abnormal situation is detected, during a step 56 module 22 will calculate the detected acceleration aᵣ for bus 2 on the basis of speed Vᵣ.

Next, during a step 58, module 24 determines the acceleration threshold a_max on the basis of curve 26 recorded in memory 28 and of speed Vᵣ.

Next, during a step 60, module 24 calculates coefficients KP and Kl of a Pl (proportional-integral) controller so as to limit the variations in the value of coefficient K and thus limit the variations in acceleration felt by the passengers or the driver. For this purpose, during an operation 62, module 24 calculates the difference a_diff between threshold a_max and acceleration aᵣ.

Coefficient KP, proportional to difference a_diff, and coefficient KI, proportional to the integration during a given period of the values of difference a_diff, are calculated during a subsequent operation 64.

If an abnormal or unusual situation is detected during step 54, the calculator moves on to a step 70 which involves gradually bringing the value of coefficients KP and KI to the value 1. For example, during step 70, the preceding values of coefficients KP and KI are increased by a step "e" to bring them, step by step, to the value 1.

Then, during a step 66, the value of coefficient K is established on the basis of the values of coefficients KP and KI, for example, by adding said two coefficients together.

After step 66, calculator 14 compares the value of coefficient K with the value 1 during a step 72 .

If the value of coefficient K is less than 1, i.e. if acceleration value aᵣ exceeds the threshold value a_max, calculator 14 will transmit coefficient K, calculated by control unit 16 via bus 20, during a step 74.

In response to the receipt of said coefficient K, unit 16 controls engine 4 during a step 76, reducing its torque to a value corresponding to the value of coefficient K received. Typically, coefficient K expresses a percentage of reduction of the current engine torque.

After step 76, the process returns to step 50.

If, during step 72, the value of coefficient K is greater than 1, the process returns directly to step 50 without sending any coefficient K to the control unit. In such case, the torque of engine 4 is determined, for example, by the position of an accelerator pedal operated by the driver of bus 2.

Thanks to limiter 10, the acceleration of bus 2, and therefore its mobility, is limited, and this leads to a reduction in fuel consumption. Moreover, as threshold value a_max depends on speed, the mobility of bus 2 can be adapted to its speed of travel.

Equally, threshold value a_max depends solely on the detected speed of bus 2. Limiter 10 is therefore particularly simple and inexpensive to manufacture.

The use of PI control in calculator 14 to establish the value of coefficient K allows the variations in acceleration of bus 2 to be limited, thus ensuring that the passengers and driver are not jolted.

Curve 26 used by limiter 10 is always the same, whatever the weight of the load carried by bus 2. Thus the behaviour, and specifically the mobility of bus 2 is independent of the weight of the load carried.

Finally, the fact that the acceleration curve intersects with the x-axis defines a speed Vₘₐₓ which this bus cannot exceed.

Numerous other embodiments of limiter 10 are possible. For example, Pl control could be replaced by any other type of control or power assistance suitable to ensure smooth variations in the value of coefficient K. For example, optionally, said Pl control could be replaced by a PID (Proportional-Integral-Derivative) control.

In this case, the value of acceleration threshold a_max is obtained solely on the basis of speed Vᵣ. Alternatively, the threshold value a_max is obtained starting from measurements of physical quantities other than speed. According to another alternative, threshold value a_max can be constant and independent of speed and all other measurements.

The process described with reference to fig. 3 above may be advantageously implemented through a program for computer comprising program coding means for the implementation of one or more steps of the method, when this program is running on a computer. Therefore, it is understood that the scope of protection is extended to such a program for computer and in addition to a computer readable means having a recorded message therein, said computer readable means comprising program coding means for the implementation of one or more steps of the method, when this program is run on a computer.

Further implementation details will not be described, as the man skilled in the art is able to carry out the invention starting from the teaching of the above description.

Many changes, modifications, variations and other uses and applications of the subject invention will become apparent to those skilled in the art after considering the specification and the accompanying drawings which disclose preferred embodiments thereof. All such changes, modifications, variations and other uses and applications which do not depart from the scope of the invention are deemed to be covered by this invention.

## Claims

1. A motor vehicle acceleration limiter, comprising :
- a vehicle engine torque control unit (16) reducing engine torque by the value of an engine torque reduction coefficient (K), and
- a calculator (14) which calculates the value of said coefficient on the basis of the difference (a_diff) between an acceleration (aᵣ) detected for the motor vehicle and an acceleration threshold (a_max), the value of the acceleration threshold (a_max) depending on the detected speed of the motor vehicle; **characterised in that** it comprises:
- a calculator module (24) calculating a reduction coefficient which limits variations in the value of said engine torque reduction coefficient (K).

2. The limiter as claimed in claim 1, **characterised in that** said calculator module (24) comprises means for calculating said reduction coefficient on the basis of a first coefficient (KP), proportional to said difference (a_diff) and a second coefficient (KI), proportional to the integration during a given period of the values of said difference (a_diff).

3. The limiter as claimed in claim 2, **characterised in that** said calculator module (24) comprises means for calculating the value of said engine torque reduction coefficient (K) on the basis of the values of said first and second coefficients (KP, KI).

4. The limiter as claimed in claim 3, **characterised in that** said means for calculating the value of said engine torque reduction coefficient (K) add said first and second coefficients (KP, KI) together.

5. The limiter as claimed in claim 1, **characterised in that** it comprises means for calculating said value of the acceleration threshold (a_max), on the basis of a predefined acceleration curve (26) representing said value of the acceleration threshold according to the detected speeds of the motor vehicle, said curve presenting an ascending slope followed by a descending slope, according to the increasing speed values detected.

6. The limiter as claimed in claim 5, **characterised in that**, in view of the increasing speed values detected, the descending slope continues until an acceleration threshold value of "0" is reached.

7. The limiter as claimed in claim 5, **characterised in that** the acceleration curve is independent of the weight of the load carried by the motor vehicle.

8. The limiter as claimed in claim 5, **characterised in that** the value of the acceleration threshold (a_max) varies solely on the basis of the detected speed of the motor vehicle.

9. Process of limitation of the acceleration of a motor vehicle, comprising the steps of:
- calculating the value of an engine torque reduction coefficient (K), to be sent to a vehicle engine torque control unit (16), reducing engine torque, on the basis of the difference (a_diff) between an acceleration (aᵣ) detected for the motor vehicle and an acceleration threshold (a_max), the value of the acceleration threshold (a_max) depending on the detected speed of the motor vehicle; **characterised in that** it comprises the steps of:
- calculating a reduction coefficient which limits variations in the value of said engine torque reduction coefficient (K).

10. Process as claimed in claim 9, **characterised in that** it comprises the step of calculating said reduction coefficient on the basis of a first coefficient (KP), proportional to said difference (a_diff) and a second coefficient (KI), proportional to the integration during a given period of the values of said difference (a_diff).

11. Process as claimed in claim 10, **characterised in that** it comprises the step of calculating the value of said engine torque reduction coefficient (K) on the basis of the values of said first and second coefficients (KP, KI).

12. Process as claimed in claim 11, **characterised in that** said first and second coefficients (KP, KI) are added together.

13. Process as claimed in claim 9, **characterised in that** it comprises the step of calculating said value of the acceleration threshold (a_max), on the basis of a predefined acceleration curve (26) representing said value of the acceleration threshold according to the detected speeds of the motor vehicle, said curve presenting an ascending slope followed by a descending slope, according to the increasing speed values detected.

14. Process as claimed in claim 13, **characterised in that**, in view of the increasing speed values detected, the descending slope continues until an acceleration threshold value of "0" is reached.

15. Process as claimed in claim 13, **characterised in that** the acceleration curve is independent of the weight of the load carried by the motor vehicle.

16. Process as claimed in claim 13, **characterised in that** the value of the acceleration threshold (a_max) varies solely on the basis of the detected speed of the motor vehicle.

17. Computer program comprising computer program code means adapted to perform all the steps of claims 9 to 16, when said program is run on a computer.

18. A computer readable medium having a program recorded thereon, said computer readable medium comprising computer program code means adapted to perform all the steps of claims 9 to 16, when said program is run on a computer.

## Patentansprüche

1. Kraftfahrzeug-Beschleunigungsbegrenzer, der umfasst:
- eine Fahrzeugmotor-Drehmomentsteuereinheit (16), die das Motordrehmoment um den Wert eines Motordrehmoment-Verringerungskoeffizienten (K) verringert, und
- einen Rechner (14), der den Wert des genannten Koeffizienten auf der Grundlage der Differenz (a_diff) zwischen einer für das Kraftfahrzeug erfassten Beschleunigung (aᵣ) und einem Beschleunigungsschwellenwert (a_max) berechnet, wobei der Wert des Beschleunigungsschwellenwerts (a_max) von der erfassten Geschwindigkeit des Kraftfahrzeugs abhängt; **gekennzeichnet durch**
- ein Rechnermodul (24), das einen Verringerungskoeffizienten berechnet, der Änderungen des Werts des genannten Motordrehmoment-Verringerungskoeffizienten (K) begrenzt.

2. Begrenzer gemäß Anspruch 1, **dadurch gekennzeichnet, dass** das genannte Rechnermodul (24) Mittel zum Berechnen des genannten Verringerungskoeffizienten auf der Grundlage eines ersten Koeffizienten (KP), der proportional zu der genannten Differenz (a_diff) ist, und eines zweiten Koeffizienten (KI), der proportional zu der Integration der Werte der genannten Differenz (a_diff) während einer gegebenen Periode ist, umfasst.

3. Begrenzer gemäß Anspruch 2, **dadurch gekennzeichnet, dass** das genannte Rechnermodul (24) Mittel zum Berechnen des Werts des genannten Motordrehmoment-Verringerungskoeffizienten (K) auf der Grundlage der Werte des genannten ersten und des genannten zweiten Koeffizienten (KP, KI) umfasst.

4. Begrenzer gemäß Anspruch 3, **dadurch gekennzeichnet, dass** die genannten Mittel zum Berechnen des Werts des genannten Motordrehmoment-Verringerungskoeffizienten (K) den genannten ersten und den genannten zweiten Koeffizienten (KP, KI) miteinander addieren.

5. Begrenzer gemäß Anspruch 1, **dadurch gekennzeichnet, dass** er Mittel zum Berechnen des genannten Werts des Beschleunigungsschwellenwerts (a_max) auf der Grundlage einer vorgegebenen Beschleunigungskurve (26) umfasst, die den genannten Wert des Beschleunigungsschwellenwerts gemäß den erfassten Geschwindigkeiten des Kraftfahrzeugs darstellt, wobei die genannte Kurve gemäß den zunehmenden erfassten Geschwindigkeitswerten einen steigenden Anstieg, gefolgt von einem fallenden Anstieg darstellt.

6. Begrenzer gemäß Anspruch 5, **dadurch gekennzeichnet, dass** der fallende Anstieg angesichts der zunehmenden erfassten Geschwindigkeitswerte fortdauert, bis ein Beschleunigungsschwellenwert von "0" erreicht ist.

7. Begrenzer gemäß Anspruch 5, **dadurch gekennzeichnet, dass** die Beschleunigungskurve von dem Gewicht der von dem Kraftfahrzeug beförderten Last unabhängig ist.

8. Begrenzer gemäß Anspruch 5, **dadurch gekennzeichnet, dass** sich der Wert des Beschleunigungsschwellenwerts (a_max) allein auf der Grundlage der erfassten Geschwindigkeit des Kraftfahrzeugs ändert.

9. Verfahren zum Begrenzen der Beschleunigung eines Kraftfahrzeugs, wobei das Verfahren die folgenden Schritte umfasst:
- Berechnen des Werts eines Motordrehmoment-Verringerungskoeffizienten (K), der an eine Fahrzeugmotor-Drehmomentsteuereinheit (16) zu senden ist, die das Motordrehmoment verringert, auf der Grundlage der Differenz (a_diff) zwischen einer für das Kraftfahrzeug erfassten Beschleunigung (aᵣ) und einem Beschleunigungsschwellenwert (a_max), wobei der Wert des Beschleunigungsschwellenwerts (a_max) von der erfassten Geschwindigkeit des Kraftfahrzeugs abhängt; **dadurch gekennzeichnet, dass** das Verfahren den folgenden Schritt umfasst:
- Berechnen eines Verringerungskoeffizienten, der Änderungen des Werts des genannten Motordrehmoment-Verringerungskoeffizienten (K) begrenzt.

10. Verfahren gemäß Anspruch 9, **dadurch gekennzeichnet, dass** es den Schritt des Berechnens des genannten Verringerungskoeffizienten auf der Grundlage eines ersten Koeffizienten (KP), der proportional zu der genannten Differenz (a_diff) ist, und eines zweiten Koeffizienten (KI), der proportional zu der Integration der Werte der genannten Differenz (a_diff) während einer gegebenen Periode ist, umfasst.

11. Verfahren gemäß Anspruch 10, **dadurch gekennzeichnet, dass** es den Schritt des Berechnens des Werts des genannten Motordrehmoment-Verringerungskoeffizienten (K) auf der Grundlage der Werte des genannten ersten und des genannten zweiten Koeffizienten (KP, Kl) umfasst.

12. Verfahren gemäß Anspruch 11, **dadurch gekennzeichnet, dass** der genannte erste und der genannte zweite Koeffizient (KP, KI) miteinander addiert werden.

13. Verfahren gemäß Anspruch 9, **dadurch gekennzeichnet, dass** es den Schritt des Berechnens des genannten Werts des Beschleunigungsschwellenwerts (a_max) auf der Grundlage einer vorgegebenen Beschleunigungskurve (26) umfasst, die den genannten Wert des Beschleunigungsschwellenwerts gemäß den erfassten Geschwindigkeiten des Kraftfahrzeugs darstellt, wobei die genannte Kurve gemäß den zunehmenden erfassten Geschwindigkeitswerten einen steigenden Anstieg, gefolgt von einem fallenden Anstieg darstellt.

14. Verfahren gemäß Anspruch 13, **dadurch gekennzeichnet, dass** der fallende Anstieg angesichts der zunehmenden erfassten Geschwindigkeitswerte fortdauert, bis ein Beschleunigungsschwellenwert von "0" erreicht ist.

15. Verfahren gemäß Anspruch 13, **dadurch gekennzeichnet, dass** die Beschleunigungskurve von dem Gewicht der von dem Kraftfahrzeug beförderten Last unabhängig ist.

16. Verfahren gemäß Anspruch 13, **dadurch gekennzeichnet, dass** sich der Wert des Beschleunigungsschwellenwerts (a_max) allein auf der Grundlage der erfassten Geschwindigkeit des Kraftfahrzeugs ändert.

17. Computerprogramm, das Computerprogrammcodemittel umfasst, die alle Schritte der Ansprüche 9 bis 16 ausführen können, wenn das genannte Programm in einem Computer abläuft.

18. Computerlesbares Medium mit einem darauf aufgezeichneten Programm, wobei das genannte computerlesbare Medium Computerprogrammcodemittel umfasst, die alle Schritte der Ansprüche 9 bis 16 ausführen können, wenn das genannte Programm in einem Computer abläuft.

## Revendications

1. Limiteur d'accélération destiné à un véhicule automobile, comprenant :
- une unité de commande du couple du moteur du véhicule (16), réduisant le couple moteur à la valeur d'un coefficient (K) de réduction du couple moteur, et
- un calculateur (14) qui calcule la valeur dudit coefficient sur la base de la différence (a_diff) entre une accélération (aᵣ) du véhicule automobile et un seuil d'accélération (a_max), la valeur du seuil d'accélération (a_max) dépendant de la vitesse relevée pour le véhicule automobile ; **caractérisé en ce qu'**il comprend :
- un module de calcul (24) calculant un coefficient de réduction qui limite les variations de la valeur dudit coefficient (K) de réduction du couple moteur.

2. Limiteur selon la revendication 1, **caractérisé en ce que** ledit module de calcul (24) comprend un moyen destiné à calculer ledit coefficient de réduction sur la base d'un premier coefficient (KP), proportionnel à ladite différence (a_diff) et d'un second coefficient (KI), proportionnel à l'intégration pendant une période donnée des valeurs de ladite différence (a_diff).

3. Limiteur selon la revendication 2, **caractérisé en ce que** ledit module de calcul (24) comprend un moyen destiné à calculer la valeur dudit coefficient (K) de réduction du couple moteur sur la base des valeurs desdits premier et second coefficients (KP, KI).

4. Limiteur selon la revendication 3, **caractérisé en ce que** ledit moyen destiné à calculer la valeur dudit coefficient (K) de réduction du couple moteur additionne l'un à l'autre lesdits premier et second coefficients (KP, KI).

5. Limiteur selon la revendication 1, **caractérisé en ce qu'**il comprend un moyen destiné à calculer ladite valeur du seuil d'accélération (a_max), sur la base d'une courbe d'accélération prédéfinie (26) représentant ladite valeur du seuil d'accélération selon les vitesses relevées pour le véhicule automobile, ladite courbe présentant une pente ascendante suivie d'une pente descendante, selon les valeurs croissantes de la vitesse relevées.

6. Limiteur selon la revendication 5, **caractérisé en ce que**, compte tenu des valeurs croissantes de la vitesse relevées, la pente descendante se prolonge jusqu'à ce qu'une valeur du seuil d'accélération atteigne le zéro.

7. Limiteur selon la revendication 5, **caractérisé en ce que** la courbe d'accélération est indépendante de la masse de la charge transportée par le véhicule automobile.

8. Limiteur selon la revendication 5, **caractérisé en ce que** la valeur du seuil d'accélération (a_max) varie uniquement sur la base de la vitesse relevée pour le véhicule automobile.

9. Procédé destiné à limiter l'accélération d'un véhicule automobile, comprenant les étapes de :
- calcul de la valeur d'un coefficient (K) de réduction du couple moteur, à envoyer à une unité de commande du couple moteur du véhicule (16), laquelle réduit le couple moteur, sur la base de la différence (a_diff) entre une accélération (aᵣ) relevée sur le véhicule automobile et un seuil d'accélération (a_max), la valeur du seuil d'accélération (a_max) dépendant de la vitesse relevée sur le véhicule automobile ; **caractérisé en ce qu'**il comprend des étapes de :
- calcul d'un coefficient de réduction qui limite les variations de la valeur dudit coefficient (K) de réduction du couple moteur.

10. Procédé selon la revendication 9, **caractérisé en ce qu'**il comprend l'étape de calcul dudit coefficient sur la base d'un premier coefficient (KP), proportionnel à la différence (a_diff) et d'un second coefficient (KI), proportionnel à l'intégration sur une période donnée des valeurs de ladite différence (a_diff).

11. Procédé selon la revendication 10, **caractérisé en ce qu'**il comprend l'étape de calcul de la valeur dudit coefficient (K) de réduction du couple moteur sur la base des valeurs desdits premier et second coefficients (KP, Kl).

12. Procédé selon la revendication 11, **caractérisé en ce que** lesdits premier et second coefficients (KP, KI) sont additionnés l'un à l'autre.

13. Procédé selon la revendication 9, **caractérisé en ce qu'**il comprend l'étape de calcul de ladite valeur du seuil d'accélération (a_max), sur la base d'une courbe d'accélération prédéfinie (26) représentant ladite valeur du seuil d'accélération selon les vitesses relevées sur le véhicule automobile ; ladite courbe présentant une pente ascendante suivie par une pente descendante, selon les valeurs croissantes de la vitesse relevées.

14. Procédé selon la revendication 13, **caractérisé en ce que**, compte tenu des valeurs de vitesse croissantes relevées, la pente décroissante se prolonge jusqu'à ce qu'une valeur du seuil d'accélération atteigne le zéro.

15. Procédé selon la revendication 13, **caractérisé en ce que** la courbe d'accélération est indépendante de la masse de la charge transportée par le véhicule automobile.

16. Procédé selon la revendication 13, **caractérisé en ce que** la valeur du seuil d'accélération (a_max) varie uniquement sur la base de la vitesse relevée pour le véhicule automobile.

17. Programme d'ordinateur comprenant un moyen de code de programme adapté pour effectuer toutes les étapes des revendications 9 à 16, lorsque ledit programme est exécuté sur un ordinateur.

18. Support de lecture par ordinateur comportant un programme enregistré sur celui-ci, ledit support de lecture par ordinateur comprenant un moyen de code de programme adapté pour effectuer toutes les étapes des revendications 9 à 16, lorsque ledit programme est exécuté sur un ordinateur.
